# EUROPEAN PATENT APPLICATION

(11) **EP 4 617 653 A1**
(43) Date of publication of application: **17.09.2025**
(21) Application number: 24162805.6
(22) Date of filing: 11.03.2024
(51) Int. Cl.: G01N 29/04, G01N 29/11, G01N 29/22

(54) **MEASUREMENT CELL FOR MEASURING MATERIAL PROPERTIES OF MINERAL BINDER COMPOSITIONS**

(71) Applicant: Sika Technology AG, 6340 Baar (CH)
(72) Inventor: JEHLE, Sebastian, 79787 Lauchringen (DE); LINDLAR, Benedikt, 78467 Konstanz (DE)
(74) Representative: Sika Patent Attorneys

(57) **Abstract**

A measuring cell (100, 200, 300, 400) for measuring material properties of a mineral binder composition, especially the strength of the mineral binder composition, during the hardening process of the mineral binder composition, especially for measuring a strength development of a shotcrete composition (SC), whereby the measurement cell comprises:
- a mold (110) with a channel-shaped receiving area (110.1) having a longitudinal axis (A) for receiving the mineral binder composition, whereby the channel-shaped receiving area (110.1) is limited laterally by a first side wall (111a) and an opposing second side wall (111b), and at the bottom by a bottom wall (112a);
- whereby the channel-shaped receiving area (110.1) at an upper area (112b) opposite the bottom is open for introduction of the mineral binder composition from an area outside the mold (110); and the channel-shaped receiving area (110.1) at a first face end (113a. 1) and/or at a second face end (113b. 1) is open, such that the channel-shaped receiving area (110.1) opens to the area outside the mold (110) at the first and/or the second face end; and
- at least one ultrasound transmitter (121a) is arrange in the first side wall (111a), such that in operation, ultrasound signals can be introduced into the channel-shaped receiving area (110.1); and
- at least one ultrasound receiver (121b) is arranged in the second side wall (111b), such that in operation, ultrasound signals introduced into the channel-shaped receiving area (110.1) by at least one ultrasound transmitter (121a) can be detected by the at least one ultrasound receiver (121b).

## Description

### Technical field

The invention relates to a measuring cell for measuring material properties of a mineral binder composition by ultrasound signals, especially the strength of the mineral binder composition, during the hardening process of the mineral binder composition, especially for measuring a strength development of a shotcrete composition. Also, the invention is related to an arrangement comprising the measurement cell and a stand. Further aspects of the invention are related to a method for measuring material properties of a mineral binder composition during the hardening process of the mineral binder composition and the use of the measuring cell or the arrangement for this purpose.

### Background art

Classical tools for monitoring strength development of mineral binder compositions during the setting and hardening process are for example done with penetrometer methods (Vicat test, needle penetration), bolt penetration or ex-situ compression testing. However, none of these tests on their own can be used for continuously monitoring the complete time evolution of the strength development from mixing of the mineral binder composition to the hardened state in a satisfactory manner.

In particular, the early strength development within the first 24 hours of shotcrete in underground construction is a highly safety-relevant issue. Since the 1990s, measurement methods have been established that are both time-consuming and discontinuous. On the one hand, this is the needle penetration method (penetrometer) for approximately the first hour and then the Hilti bolt setting method until approximately 24 hours. Therefore, during the entire 24 hours period, the measurements have to be performed manually with two different methods.

Accordingly, the readings are discontinuous and errors are rather likely. Overall the quality of these measurements strongly depend on individual skills of the person who carries out the measurements.

In this regards, EP 1 726 947 A1 (Sika Technology AG) describes devices and method based on ultrasound sound waves to permit easy, continuous, nondestructive and non-invasive monitoring of the dynamic elastic modulus of a material such as a mineral binder. Thereby the rheological and mechanical evolution of a mineral binder such as cement, concrete, in particular shotcrete, or the like, can be quantified from early age to far beyond the setting of a mineral binder.

The measuring principle of ultrasonic measurement is based on the theory of sound propagation in substances and the correlation with their mechanical properties. When an ultrasound wave hits a viscoelastic material, the amplitude is significantly attenuated. The attenuated wave then is detected at a sensor. As the material hardens, the reduction in amplitude becomes greater and greater. The shear modulus can then be determined from the relative amplitude reduction, which in turn is a measure of the strength of the curable material. For ultrasonic measurements, measuring sensors are preferably used which generate ultrasound pulses in the range from 0.1 to 10 MHz. Depending on whether the compression modulus or the shear modulus is to be measured, longitudinal waves or transverse waves are emitted. These relationships are known per se to those skilled person.

Approaches based on ultrasound analysis have been implemented in practice e.g. in the form of a tool called "Sika^{®} Pulsment" (Sika Technology AG, Switzerland) whereby ultrasound analysis at the surface of freshly sprayed shotcrete can be performed. However, this approach is restricted to laboratory testing with miniaturized spray guns and to measurements at the surface of the mineral binder compositions. Further information on ultrasonic measurement can also be found in the publication " Continuous measurement of the strength development of shotcrete" by Oblak et al., Shotcrete conference 2012 (editor: Prof. Wolfgang Kusterle) in chapter 3.

Other solutions provided by the German company UltraTest GmbH make use of circular-cylindrical molds into which the mineral binder compositions to be analyzed are poured. Thereby, the setting processes and strength development of circular-cylindrical samples can be monitored by measuring the transmission of ultrasound waves through the circular-cylindrical samples. However, for in-situ monitoring of shotcrete applications with real-scale shotcrete spray guns, this system is not suitable either, in particular because the molds cannot be filled properly resulting in particular in poor signal quality.

Thus, there is still a need for new and improved solutions that overcome the aforementioned disadvantages as far as possible.

### Disclosure of the invention

It is an object of the present invention to provide improved and/or more flexible solutions for measuring material properties of a mineral binder composition during the hardening process of the mineral binder composition. Especially, the method should allow for monitoring the material properties of the bulk mineral binder composition, with special attention being paid to the inner areas of the composition. Thereby, preferably, the solutions should allow for measuring the strength of the mineral binder composition, in particular the strength development over a time interval of at least 24 hours after applying the mineral binder composition. In particular, the solution should allow for in-situ measuring the strength of a shotcrete composition whereby the shotcrete is applied with real-scale shotcrete equipment used for practical shotcrete applications, e.g. for underground construction work such as for example in mining, tunnel construction and/or excavation work.

Surprisingly, it has been found that these objects can be achieved with a measuring cell according to claim 1.

The measurements cell according to the invention can be used for a wide range of different applications, especially for monitoring the strength and/or elasticity development of the mineral binder composition during the hardening process. In particular, the measurement cell allows for monitoring the material properties of the entire mineral binder composition during the hardening process, including the inner areas of the composition. Put differently, the measurements cell according to the invention allows for monitoring the material properties of the bulk of the mineral binder composition, without limitation to the surface. Overall, this greatly enhances measurement quality resulting in a more realistic representation of the material properties of the hardening mineral binder composition.

Also, the measurement cell is highly beneficial for monitoring the hardening processes of shotcrete. In particular, shotcrete compositions can be applied in-situ with real-scale shotcrete equipment used e.g. in underground construction work such as for example in a tunnel and/or an excavation. Without wishing to be bound by the theory, it is believed that during the shotcrete spray process, rebound can be released via the openings at the first face end and/or at a second face end of the channel-shaped receiving area. This makes it possible to completely fill the channel-shaped receiving area up to the upper area, such that the volume between the at least one ultrasound transmitter and the at least one ultrasound receiver is completely filled with mineral binder composition or shotcrete, respectively.

Furthermore, the channel-shaped receiving area allows for arranging several ultrasound transmitters and several ultrasound receivers in parallel. Inhomogeneity in the composition of the mineral binder can be compensated for by averaging several simultaneous measurements at different locations.

Overall, the measurement cell according to the invention allows for automated quality measurement over the first 24 hours, which can be continuously monitored on site and/or via an optional communication interface. This makes life considerably easier for quality control, particularly in underground work such as e.g. in mining, tunnel construction and/or excavation work. Particularly, organization of the work steps in underground construction with respect to quality, time, costs, and/or construction progress can be improved considerably.

Further aspects and particularly preferred embodiments are outlined throughout the description and further independent and dependent claims.

### Ways of carrying out the invention

A first aspect of the present invention is directed to a measuring cell for measuring material properties of a mineral binder composition, especially the strength of the mineral binder composition, during the hardening process of the mineral binder composition, especially for measuring a strength development of a shotcrete composition, whereby the measurement cell comprises:
- a mold with a channel-shaped receiving area having a longitudinal axis for receiving the mineral binder composition, whereby the channel-shaped receiving area is limited laterally by a first side wall and an opposing second side wall, and at the bottom by a bottom wall;
- whereby the channel-shaped receiving area at an upper area opposite the bottom is open for introduction of the mineral binder from an area outside the mold; and the channel-shaped receiving area at a first face end and/or at a second face end is open, such that the channel-shaped receiving area opens to the area outside of the mold and the measurement cell at the first and/or the second face end; and
- at least one ultrasound transmitter is arrange in the first side wall, such that in operation, ultrasound signals can be introduced into the channel-shaped receiving area; and
- at least one ultrasound receiver is arranged in the second side wall, such that in operation, ultrasound signals introduced into the channel-shaped receiving area by at least one ultrasound transmitter can be detected by the at least one ultrasound receiver.

The expression "mineral binder" refers in the context of the present invention in particular to a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime). A "mineral binder composition" is accordingly a composition containing at least one mineral binder. For the present purposes, a "cementitious binder" or a "cementitious binder composition" is, in particular, a hydraulic binder or a hydraulic binder composition having a proportion of at least 5% by weight, in particular at least 20% by weight, preferably at least 35% by weight, especially at least 65% by weight, of cement clinker. According to a preferred embodiment the cement clinker is Portland cement clinker. In the present context, cement clinker is, in particular, milled cement clinker.

In particular, the mineral binder or the binder composition comprises a hydraulic binder, preferably cement. Particular preference is given to a cement having a cement clinker content of 35% by weight. In particular, the cement is of the type OEM I, II, III (according to the standard EN 197-1) and/or a calcium aluminate cement (according to the standard EN 14647:2006-01). Preferably, the cement is of the type OEM I. A proportion of the hydraulic binder in the total mineral binder is advantageously at least 5% by weight, in particular at least 20% by weight, preferably at least 35% by weight, especially at least 65% by weight. In a further advantageous embodiment, the mineral binder consists to an extent of at least 95% by weight of a hydraulic binder, in particular cement clinker.

According to a preferred embodiment the mineral or cementitious binder of the present invention is a cement of type CEM I, II or III, preferably of type CEM I, as described above. Such cement is referred to as Ordinary Portland Cement (OPC) in the following.

According to another preferred embodiment the mineral or cementitious binder of the present invention is a mixture of OPC and calcium aluminate cement (CAC).

The calcium aluminate cement is as described above with a main phase consisting of hydraulic calcium aluminates. The weight ratio of OPC to CAC in such mixtures is >1, preferably >2, more preferably >5. A ratio lower than 1 may lead to problems with curing at temperatures <0° C. and with long term durability. Such mixtures are thus preferably OPC-rich.

According to another preferred embodiment the mineral or cementitious binder additionally comprises up to 35 w %, preferably up to 25 w %, especially up to 15 w %, each based on the total dry weight of the hydraulic binder, of a calcium sulfate. The calcium sulfate may be present in the form of calcium sulfate-hemihydrate (α- and/or β-type), calcium sulfate-dihydrate and/or anhydrite.

However, it can also be advantageous for the binder composition to contain other binders in addition to or instead of a hydraulic binder. These are, in particular, latent hydraulic binders and/or pozzolanic binders. Suitable latent hydraulic and/or pozzolanic binders are, for example, slag, fly ash and/or silica dust. In an advantageous embodiment, the mineral binder comprises 5-95% by weight, in particular 5-65% by weight, especially 15-35% by weight, of latent hydraulic and/or pozzolanic binders.

Furthermore, the binder may comprise or consist of calcined clays and/or LC3 binders. LC3 binders are cementitious mineral binders consisting partly of Portland cement and partly of a cement substitute. Thereby, the cement substitute is based on a combination of calcined clay, limestone and gypsum.

Especially, the mineral binder composition in addition comprises aggregates and/or water.

The term "aggregate" as used in the context of the present invention refers to mineral materials that are non-reactive in the hydration reaction of mineral binders. Aggregates can be any aggregate typically used for cementitious materials such as concrete, mortars, screeds, renders, grouts, coatings, putties or the like. Typical aggregates are for example rock, crushed stone, gravel, slag, sand, recycled concrete, perlite or vermiculite.

A proportion of water with respect to the mineral binder in the composition may be in the range of 0.25 - 0.7, especially 0.3 - 0.5.

It can be advantageous if the mineral binder composition comprises additives for mineral binder compositions. Such additives can be for example, accelerators, plasticizers, superplasticizers, rheology modifiers, retarders, air-entrainers, deaereating agents, corrosion inhibitors, fibers, synthetic organic polymers, expansion producing additives, pigments, waterproofing additives, alkali-aggregate reaction inhibitors, and/or anti-microbial agents.

"Shotcrete" or sprayed concrete, respectively, is concrete or mortar conveyed through a hose and pneumatically projected at high velocity (e.g. 30 - 40 m/s) onto a surface. Shotcrete is typically reinforced by conventional steel rods, steel mesh, and/or fibers.

Shotcrete is formulated such that after addition of an accelerator it is sticky and resists flowing when at rest to allow use on walls and ceilings, but exhibits sufficient shear thinning to be easily pumpable through hoses. Shotcrete is usually an all-inclusive term for both the wet-mix and dry-mix versions.

Shotcrete is placed and compacted/consolidated at the same time, due to the force with which it is ejected from the spray nozzle. It can be sprayed onto any type or shape of surface, including vertical or overhead areas.

Shotcrete has the characteristics of high compressive strength, good durability, water tightness and frost resistance.

As used herein, the term "sound" is meant to refer to *infrasound* which is sound with a range of frequencies below 20Hz, which is below that of human hearing, to *audible sound* which is sound with a range of frequencies between 20 Hz and 20 kHz which is in the range of that of human hearing, and to *ultrasound*, which is sound with a range of frequencies above 20kHz, which is above that of human hearing.

Especially, the at least one ultrasound transmitter and the at least one ultrasound receiver form an ultrasound tester pair. In particular, the at least one ultrasound transmitter is configured for generating ultrasound with a frequency of 20 kHz - 10 MHz, especially 24 kHz - 5 MHz, in particular 25 kHz - 1 MHz. The at least one ultrasound receiver in particular is configured for detecting ultrasound with a frequency of 20 kHz - 10 MHz, especially 24 kHz - 5 MHz, in particular 25 kHz - 1 MHz.

Especially, the at least one ultrasound transmitter and the at least one ultrasound receiver comprise a piezoelectric transducer. However, other transducers might be suitable as well.

In particular, the channel-shaped receiving area, in a direction perpendicular to the longitudinal axis, has an essentially constant cross-section, especially a rectangular shape, from the first face end to the second face end. Thus, in this embodiment, optionally apart from the ultrasound transmitter and/or receiver(s), there are no protrusions and/or recesses in the channel-shaped receiving area that could cause problems when applying the mineral binder composition with shotcrete application techniques. However, for special applications, varying cross-sections might be suitable as well.

According to the invention, the channel-shaped receiving area opens to the area outside of the mold and/or the measurement cell at the first and/or at the second face end. This means that there is an opening in the channel-shaped receiving area at the first and/or at the second face end.

The "face ends" of the mold are meant to be the ends of the mold in the direction of the longitudinal axis.

Particularly, the channel-shaped receiving area opens to the area outside of the mold and/or the measurement cell at the first and at the second face end. Thus, in this case, there is an opening area at both face ends. Such a configuration turned out to be optimal for shotcrete applications.

However, if desired, the channel-shaped receiving area at one of the first or the second face end may be partly or fully closed, e.g. by a cap.

Preferably, a first opening area at the first face end and/or a second opening area at the second face end is essentially identical in size and shape with a cross-section of the channel-shaped receiving area in the area of the first face end and/or a cross-section of the channel-shaped receiving area in the area of the second face end.

In particular, the opening in the upper area opposite the bottom area is essentially rectangular.

Especially, the opening in the upper area opposite the bottom area extends essentially along the whole length from the first face end to the second face end.

In particular, the channel-shaped receiving area, in a direction perpendicular to the longitudinal axis, has a U-shaped cross-section. In this case, the side walls may be configured as flat rectangular walls, whereas the bottom wall may be configured as a curved and/or a flat wall.

According to a highly preferred embodiment, the channel-shaped receiving area has a cuboid shape.

Preferably, the first side wall is arranged plane parallel to the second side wall, and, preferably, the bottom wall is arranged perpendicular to the first and/or the second side wall.

In particular, the first side wall, the second side wall and/or the bottom wall have a rectangular shape, especially a flat rectangular shape.

Preferably, a width of the channel-shaped receiving area, measured in a direction perpendicular to the longitudinal axis, is smaller than a length of the channel-shaped receiving area, measured in a direction in parallel to the longitudinal axis; and/or a ratio of the length of the channel-shaped receiving area to the width of the channel-shaped receiving area is from 1.1 - 30, especially 1.3 - 10, in particular 1.4-4.

Preferably, a depth of the channel-shaped receiving area, measured in a direction perpendicular to the longitudinal axis from the open upper area opposite the bottom to the bottom, is smaller than a length of the channel-shaped receiving area; and/or a ratio of the length of the channel-shaped receiving area to the depth of the channel-shaped receiving area is from 1.1 - 30, especially 1.5 - 10, in particular 2 - 5.

In particular, in a direction perpendicular to the longitudinal axis, a distance between the side walls is from 50 - 450 mm, especially 100 - 350 mm, e.g. 200 - 260 mm; and/or in a direction parallel to the longitudinal axis, a distance between the first face end and the second face end is from 50 - 700 mm, especially 150 - 600 mm, e.g. 250 - 500 mm.

In particular, in a direction perpendicular to the longitudinal axis, a depth of the channel-shaped receiving area, measured from the open upper area opposite the bottom to the bottom, is from 30 - 250 mm, especially 60 - 180 mm, e.g. 90 - 150 mm.

Such configurations of the channel-shaped receiving area are particularly beneficial for completely filling the channel-shaped receiving area with shotcrete by real-scale shotcrete spray guns without getting problems with rebound.

According to a further preferred embodiment, two, three, four or more ultrasound transmitters are arranged in the first side wall, especially in longitudinal direction spaced apart; and two, three or more receivers are arranged in the second side wall, especially in longitudinal direction spaced apart. Thereby, preferably, one ultrasound transmitter and one ultrasound receiver are assigned to each other, such that in operation, ultrasound signals introduced into the channel-shaped receiving area by the one ultrasound transmitter can be detected by the assigned one ultrasound receiver, in particular independently from the other transmitter(s) and receiver(s). Put differently, the one ultrasound transmitter and one ultrasound receiver are assigned to each other form an ultrasound tester pair. Thus, in this embodiment, the measurement cell comprises two, three, four or more ultrasound tester pairs.

With such a setup, inhomogeneity in the composition of the mineral binder can be compensated for by averaging several simultaneous measurements at different points.

Especially, in a direction parallel to the longitudinal axis, a distance between neighboring ultrasound transmitters of the two, three, four or more ultrasound transmitters and/or a distance between neighboring ultrasound receivers of the two, three, four or more ultrasound receivers is from 30 - 120 mm, especially 50 - 100 mm, e.g. 60 - 80 mm. With such a setup, with each ultrasound tester pair, independents measurements can be performed in a reliable manner.

Preferably, the at least one ultrasound transmitter and/or the at least one ultrasound receiver protrudes into the channel-shaped receiving area, especially through the first side wall and/or the second side wall. A protrusion length measured from the respective side wall is from 0.1 - 10 mm, especially 1 - 5 mm or 1 - 3 mm. In case of more than one transmitter and/or more than one receiver, this preferably holds for all of the transmitters and/or receivers.

Such configurations results in a highly reliable and direct contact between the transmitter(s) and/or receiver(s) with the mineral binder composition, without negatively affecting the filling of the channel-shaped receiving area with mineral binder composition.

According to another preferred embodiment, the at least one ultrasound transmitter and/or the at least one ultrasound receiver with its/their end(s) are flush-mounted in the side wall(s). Especially such that the at least one ultrasound transmitter and/or the at least one ultrasound receiver does/do not protrude into the channel-shaped receiving area. This allows for an easier demolding and cleaning.

In particular, the at least one ultrasound transmitter and/or the at least one ultrasound receiver is located in a central area of the first and/or in a central area of the second side wall, especially spaced apart from any edge, corner and/or opening of the channel-shaped receiving area.

Preferably, the mold is configured such, that a shape of the channel-shaped receiving area can be changed between a measurement position and a demolding position.

Especially, the demolding position is such that hardened mineral binder can be removed from the channel-shaped receiving area, in particular though one of the openings. In particular, in the demolding position, the first side wall and the second side wall are at an angle of 1 - 90°, especially 2 - 45°, in particular 2 - 10°, especially 3 - 5°, to each other. In particular, in the demolding position, the first side wall and the second side wall are at an angle of at least 2°, especially at least 3°, in particular at least 5° or at least 10°. In the measurement position, the channel-shaped receiving area is configured such that in operation, ultrasound signals introduced into the channel-shaped receiving area by at least one ultrasound transmitter can be detected by the at least one ultrasound receiver. Preferably, in the measurement position, the first and the second side walls are arranged plane parallel to each other. In particular, in the measuring position the first side wall and the second side wall are at an angle of 0 - 2°, especially 0 - 1° or 0°. In particular, in the measuring position, the first side wall and the second side wall are at an angle of less than 2°, especially less than 1°.

In particular, in the demolding position, the first side wall and the second side wall are at an angle that is larger than the angle of the first side wall and the second side wall in the measuring position.

Especially, the mold comprises a hinge mechanism that allows the first side wall and/or the second side wall to be tilted away from each other around a tilt axis, in particular running essentially in parallel to the longitudinal axis, especially the tilt axis is located in the area of the bottom wall. Especially such that in the demolding position the first side wall and the second side wall are at an angle of 1 - 90°, especially 2 - 45°, in particular 2 - 10°, especially 3 - 5°, to each other. In particular, such that in the demolding position, the first side wall and the second side wall are at an angle of at least 2°, especially at least 3°, in particular at least 5° or at least 10°. In particular, in the measuring position the first side wall and the second side wall are at an angle of 0 - 2°, especially 0 - 1° or 0°. In particular, such that in the measuring position, the first side wall and the second side wall are at an angle of less than 2°, especially less than 1°.

In a special embodiment, the bottom wall comprises the hinge mechanism and/or the bottom wall is made at least partially from a flexible material, such that the bottom wall can folded and/or bent when the first side wall and/or the second side are tilted away from each other around the tilt axis.

The hinge mechanism preferably comprises a locking mechanism that allows to lock the channel-shaped receiving area in the measurement position and to allow to change the channel-shaped receiving area to the demolding position.

For example, the locking mechanism comprises a movable pin, e.g. a cylindrical pin, that can be moved in a corresponding cavity, e.g. a bore, in the bottom wall of the mold. Thereby, the pin preferably is made from a material that has a higher stiffness, e.g. a lower modulus of elasticity, than at least a central section of the bottom wall of the mold. This allows to lock the channel-shaped receiving area in the measurement position if the pin is inserted in the cavity and to change the channel-shaped receiving area to the demolding position by at least partly or fully removing the pin from the cavity. The pin can for example be made from metal, e.g. steel, and/or the central section of the bottom wall or the bottom wall as a whole is made from silicone.

In another preferred embodiment, the locking mechanism comprises at least one rotatable axis with eccentric sections, whereby the rotatable axis is mounted in one or more bearings of the measurement cell and/or the mold, especially such that upon rotation of the rotatable axis, the eccentric sections induce the change of the channel-shaped receiving area, e.g. by tilting two parts of the measurement cell and/or the mold that are pivotable against each other with the hinge mechanism.

According to a further preferred embodiment, the mold comprises a support structure and an insert, especially a removable insert, whereby the insert defines the channel-shaped receiving area. Preferably, the insert is made from a material that is more flexible than the support structure. Flexibility in particular is mean to be Young's modulus.

The support structure may for example be made from a metallic material, e.g. aluminum and/or steel. The insert may be made from a synthetic material.

The insert, the first side wall, the second side wall, and/or the bottom wall of the mold preferably are made from synthetic material and/or a flexible material, especially from acrylates and/or silicones, in particular silicones. Silicones are meant to be polymers based in repeating units of siloxane. Such materials are chemically and mechanically rather stable and show low adhesion to mineral binder compositions. Thus, demolding and cleaning of the mold after measurements can be carried out easily. However, other materials may be used as well for special applications.

Especially, if mounted, the insert covers at least the top side of the support structure, preferably the top side and all of the side areas of the support structure, in particular the entire support structure, especially such that the support structure in operation of the measurement cell is protected from being contaminated with mineral binder composition. Thereby, the insert preferably is a seamless cover. The top side of the support structure is meant to be the side that is located outside the channel-shaped receiving area facing away from the bottom of the channel-shaped receiving area.

Thereby, the locking mechanism, if present, preferably is integrated in the support structure. Especially, it comprises at least one rotatable axis with eccentric sections, whereby the rotatable axis is mounted in one or more bearings of the support structure, especially such that upon rotation of the rotatable axis, the eccentric sections induce the change of the channel-shaped receiving area, e.g. by tilting two parts of the support structure pivotable against each other with the hinge mechanism. In this case, preferably, the insert is made from a material that is flexible enough to follow the tilt movement.

In particular, the measurement cell further comprises a control unit for controlling the at least one ultrasound transmitter and the at least one ultrasound receiver, and optionally at least one power source for operating the control unit and the at least one ultrasound transmitter and the at least one ultrasound receiver. In particular, the control unit comprises at least one processor unit and at least one random access memory unit.

Preferably, the control unit further comprises at least one memory device for storing measurement data and/or programs.

Also, the control unit in particular comprises at least one communication interface, especially a wired and/or a wireless communication interface, especially for receiving and/or sending control data and/or measurement data.

Preferably, the control unit is configured to control the at least one ultrasound transmitter to generate an ultrasound signal, especially with the above described frequencies, and to control the at least one ultrasound receiver to record a temporal evolution of the ultrasound signal, especially the temporal evolution of the ultrasound velocity and/or intensity of the ultrasound signal, in particular at a predefined sampling rate, e.g. 0.1 Hz - 50 MHz.

A further aspect of the present invention is concerned with an arrangement comprising a measurement cell as described above and a stand that is configured for keeping the measurement cell in a stable position, especially if the stand is leaned against a vertical wall.

Especially, the stand is configured for keeping the measurement cell in such a position that the longitudinal axis stands at an angle to the horizontal, especially an angle of 5 - 80°, in particular 10 - 60°, preferably 15 - 30°.

Further preferred the stand is configured for keeping the measurement cell in such a position that the side walls of the channel-shaped receiving area are arranged in plane parallel vertical planes and/or, with respect to the direction of the gravitational force, the first face end of the channel-shaped receiving area is at a lower position that the second face end of the channel-shaped receiving area or vice versa.

Especially, the stand is configured as a leaning shelf with at least two legs to be placed on a horizontal plane, an upper end to be leaned against a vertical wall and at least one receiving area in between the legs and the upper end for placing the measurement cell.

Also, the stand can be used as a stretcher to carry the measurement cell, e.g. by two persons. Thereby, for example, a first person can keep the stand at the legs whereas a second person can keep the stand at the upper end. This allows for moving the measurement cell without touching it and/or chaning its configuration The arrangement may be provided as a kit of parts or the arrangement may be preset with the measurement cell mounted on the stand.

A still further aspect of the present invention is directed to a method for measuring material properties of a mineral binder composition, especially the strength of the mineral binder composition, during the hardening process of the mineral binder composition, with a measuring cell or an arrangement as described above, comprising the steps of:
- Filling, especially by spraying, a workable mineral binder composition into the channel-shaped receiving area, especially from an area outside through the open upper area opposite the bottom of the channel-shaped receiving area, such that the at least one ultrasound transmitter and the at least one ultrasound receiver are in contact with the workable mineral binder composition, in particular the whole channel-shaped receiving area is filled with the mineral binder composition,
- Transmitting ultrasound signals through the hardening mineral binder composition with the al least one ultrasound transmitter,
- With the at least one ultrasound receiver, recording a temporal evolution of the ultrasound signal, especially the temporal evolution of the ultrasound velocity and/or intensity of the transmitted ultrasound signal, in particular at a predefined sampling rate, e.g. 0.1 Hz - 50 MHz.

Further preferred, the recorded temporal evolution of the ultrasound signal then are converted into the temporal evolution of the material properties of interest, especially the modulus of elasticity and/or strength.

In particular, parameters, conditions and features as described above in connection with the measurement cell and/or the arrangement according to the invention are likewise implemented with the method according to the invention.

In particular, the temporal evolution over a period of at least 12 hours, in particular at least 24 hours, after applying the mineral binder composition in the channel-shaped receiving area is measured.

Preferably, the mineral binder composition is a shotcrete composition and/or the channel-shaped receiving area is filled by a shotcrete application technique, in particular with real scale shotcrete equipment suitable for use in mining, tunnel construction and/or excavation work.

According to a particular embodiment, the channel-shaped receiving area is filled with a shotcrete composition during the process of application of the same shotcrete composition on a substrate at a construction site. The substrate for example is a wall, a floor, and/or a ceiling, e.g. of an excavation, a tunnel and/or a mine. Thereby, preferably, the shotcrete composition is sprayed into the channel-shaped receiving area at the same place and with the same application technique, especially under identical application conditions, as the shotcrete composition is applied on the substrate.

This allows for an in-situ monitoring of the hardening of the shotcrete composition with real shotcrete equipment under real conditions.

Preferably, the measurement cell remains at the place of filling and/or is not moved after filling the channel-shaped receiving area with the mineral binder composition. Given this, the hardening of the mineral binder composition takes place under identical conditions, e.g. with respect to temperature and/or humidity, given at the place of filling. This is for example highly beneficial in case of shotcrete applications.

Especially, during the filling of the channel-shaped receiving area, the measurement cell is arranged such that the longitudinal axis stands at an angle to the horizontal, especially an angle of 10 - 80°, in particular, 45 - 60°.

Also, preferably, during the filling of the channel-shaped receiving area the measurement cell is arranged in such a position that the side walls of the channel-shaped receiving area are arranged in plane parallel vertical planes and/or, with respect to the direction of the gravitational force, the first face end of the channel-shaped receiving area is at a lower position that the second face end of the channel-shaped receiving area or vice versa.

Preferably, these arrangement(s) are maintained during the whole measuring process.

A further aspect of the present invention is directed to the use of a measurement cell or an arrangement as described above for measuring material properties of a mineral binder composition, especially the strength of the mineral binder composition, in particular the temporal strength evolution of a mineral binder composition, during the hardening process of the mineral binder composition, in particular within or over a period of at least 12 hours, especially within or over a period of at least 24 hours after applying the mineral binder composition in the measurement cell.

Thereby, preferably, the mineral binder composition is a shotcrete composition.

In particular, parameters, conditions and features as described above in connection with the measurement cell, the arrangement and the method according to the invention are likewise implemented with the use according to the invention.

Further advantageous implementations of the invention are evident from the exemplary embodiments.

### Brief description of the drawings

The drawings used to explain the embodiments show:
- Fig. 1: A perspective view of a mold with a cuboid channel-shaped receiving area;
- Fig. 2a: A perspective view of ultrasound transmitters to be installed in the first side wall of the mold of Fig. 1;
- Fig. 2b: A perspective view of ultrasound receivers to be installed in the second side wall of the mold of Fig. 1;
- Fig. 3: A photography of a first measurement cell consisting of the mold of Fig. 1 with installed ultrasound transmitters and ultrasound receivers;
- Fig. 4: A second measurement cell in a view onto its second face end in the measurement position. The second measurement cell comprises a mold with a bottom wall made of a soft material forming a hinge mechanism and a locking mechanism with a movable pin in the bottom wall;
- Fig. 5: The measurement cell of Fig. 5 in the demolding position. Thereby the pin has been partly removed from bottom wall to allow the two side walls of the mold to be tilted away from each other. This allows for removing hardened mineral binder from the mold;
- Fig. 6: A third measurement cell comprising a support structure carrying a removable insert with a locking mechanism based on a rotatable axis in the measurement position;
- Fig. 7: The measurement cell of Fig. 6 in the demolding position;
- Fig. 8: A perspective view of a rendering of a support structure which is part of a fourth measurement cell as shown in Fig. 10;
- Fig. 9: A perspective view of a rendering of a further insert made of silicone that is configured to be mounted on the support structure of Fig. 8;
- Fig. 10: A perspective view of a rendering of the fourth measurement cell comprising the support structure of Fig. 8 and the insert of Fig. 9 mounted thereon;
- Fig. 11: An arrangement whereby the measurement cell of Fig. 10 is placed on a stand that is configured as a leaning shelf.

In the figures, the same parts are given the same numbers.

### Exemplary embodiments

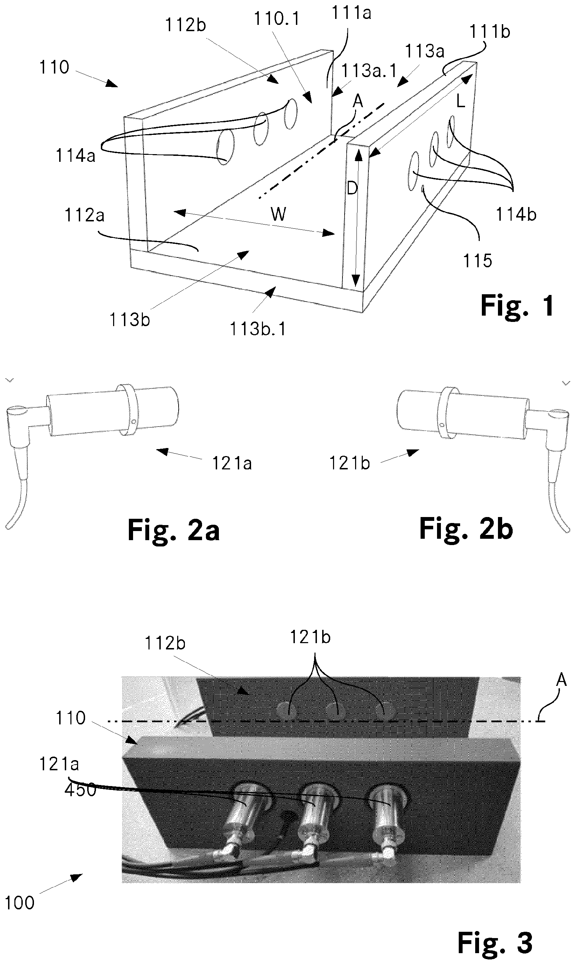

Fig. 1 shows a mold 110 with a cuboid channel-shaped receiving area 110.1 having a longitudinal axis A. The mold 110 for example is made from silicone. The channel-shaped receiving area 110.1 is limited by a first rectangular side wall 111a and a second rectangular side wall 111b , whereby the side walls 111a and 111b are arranged plane parallel with respect to each other. At the bottom, the channel-shaped receiving area 110.1 is limited by a rectangular bottom wall 112a, whereby the bottom wall 112a is oriented perpendicular to both of the side walls 111a, 111b.

At the upper area opposite the bottom there is an opening 112b, such that the channel-shaped receiving area 110.1 is open at the upper area along the whole length. This allows for introduction of mineral binder composition from an area outside the mold 110.

Also, there is a first opening 113a at the first face end 113a. 1 of the mold 110 and a second opening 113b, at the second face end 113b. 1 of the mold 110. Thus, at both face ends 113a. 1, 113b. 1, the channel-shaped receiving area 110.1 opens to the area outside the mold 110.

Overall, the channel-shaped receiving area 110.1 in a direction perpendicular to the longitudinal axis A has an essentially constant rectangular cross-section from the first face end 113a. 1 to the second face end 113b. 1. Also, the first opening area 113a at the first face end 113a. 1 and the second opening area 113b at the second face end 113b. 1 are essentially identical in size and shape with the cross-section of the channel-shaped receiving area 110.1 in the area of the first face end 113a.1 and a cross-section of the channel-shaped receiving area 110.1 in the area of the second face end 113b.1.

A width W of the channel-shaped receiving area 110.1 is for example 140 mm, whereas a length L of the of the channel-shaped receiving area 110.1 is for example 380 mm and a depth D of the channel-shaped receiving area 110.1 is for example 130 mm.

At the first side wall 111a, there are three cylindrical bores 114a for receiving three separate ultrasound transmitters 121a as shown in Fig. 2a. Likewise, at the second side wall 111b, there are three cylindrical bores 114b for receiving three separate ultrasound receivers 121b as shown in Fig. 2b. When mounted in the respective bores 114a, the ultrasound transmitters 121a can introduce ultrasound signals into the channel-shaped receiving area 110.1. Also, when mounted in the respective bores 114b, the ultrasound receivers 121b can detect the ultrasound signals introduced into the channel-shaped receiving area 110.1 by the corresponding ultrasound transmitters 121a. The ultrasound transmitters 121a and the ultrasound receivers 121b are for example based on piezoelectric transducers and configured to be operated in the range of 20 kHz - 10 MHz, especially 24 kHz - 5 MHz, in particular 25 kHz - 1 MHz.

Fig. 3 shows a photography of measurement cell 100 consisting of the mold 110 with installed ultrasound transmitters 121a and ultrasound receivers 121b. In each case, one of the transmitters 121a and an opposing one of the receivers 121b form an ultrasound tester pair. Thus, in the embodiment shown in Fig. 3, three ultrasound tester pairs are present that are spaced apart in the longitudinal direction or the direction of the longitudinal axis A, respectively. For example, a distance between neighboring tester pairs is about 70 mm.

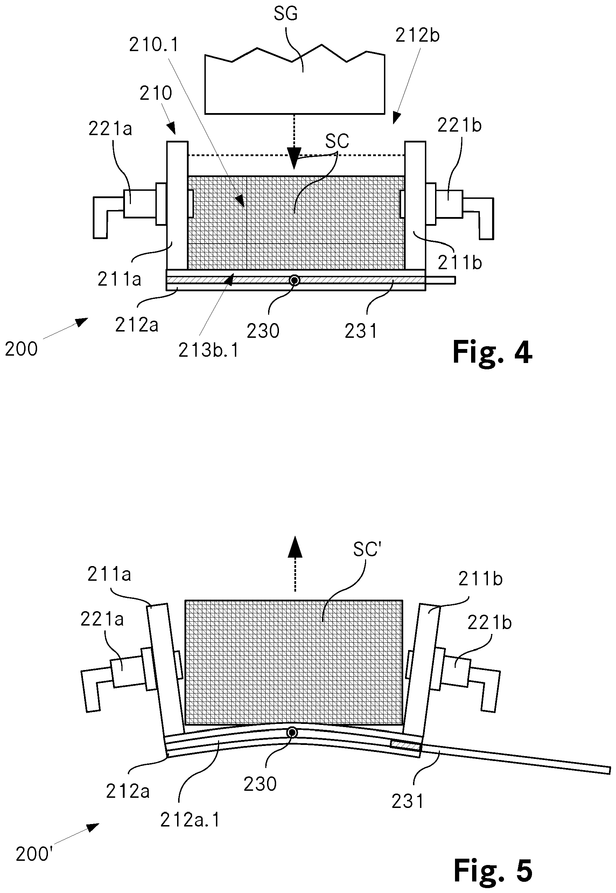

Fig. 4 shows a second measurement cell 200 in a view onto its second face end 213b.1. The second measurement cell 200 is similar in design when compared with the measurement cell 100. It comprises a mold 210 with a cuboid channel-shaped receiving area 210.1. The channel-shaped receiving area 210.1 is limited at the left side by a first rectangular side wall 211a and a the right side by a second rectangular side wall 211b, whereby the side walls 211a and 211b are arranged plane parallel with respect to each other. At the bottom, the channel-shaped receiving area 210.1 is limited by a rectangular bottom wall 212a, whereby the bottom wall 212a is oriented perpendicular to both of the side walls 211a, 211b. Furthermore, in the first side wall 221a an ultrasound transmitter is installed in the same manner as explained with respect to Fig. 1 - 3. Likewise, in the second side wall 211b, an ultrasound receiver 221b is mounted.

In addition, the bottom wall 212a comprises a soft material, e.g. a silicone, forming a hinge mechanism with a tilt axis 230 that allows the first side wall and the second side wall to be tilted away from each other around a tilt axis 230 (cf. Fig. 5). Furthermore, the hinge mechanism comprises a locking mechanism that allows to lock the channel-shaped receiving area 210.1 in the measurement position (= position shown in Fig. 4) and to change the channel-shaped receiving area 210.1 to the demolding position (= position shown in Fig. 5). The locking mechanism comprises a cylindrical pin 231 made from a material that is stiffer then the bottom wall 212a, e.g. a pin made from steel, that can be introduced in a form-fit manner into a bore 212a.1 (cf. Fig. 5) running through the bottom wall 212a. If the pin is fully inserted into the bore 212a.1, the bottom wall 212a takes a flat configuration and the mold 210 is fixed in the measurement position. If the pin 231 is removed from the bore 212a.1, the bottom wall 212a can be bent around tilt axis 230 whereby the side walls 211a, 211b are tilted away from each other as shown in Fig. 5.

For example, the mold 210 in measurement position as shown in Fig. 4 can be filled from above with a workable shotcrete composition SC through the upper opening 212b, e.g. by using a shotcrete spray gun SG used at a construction site. If the fill level (indicated by the dashed horizontal line in Fig. 4, the measurement is started and the strength evolution, or any other parameter to be observed during the hardening process of the shotcrete composition SC, can be monitored. After for example, 24 hours when the shotcrete composition has hardened. The pin 231 is removed and the bottom wall 212a is bent around tilt axis 230 whereby the side walls 211a, 211b are tilted away from each other. This allows the hardened concrete block to be removed from the channel-shaped receiving area 210.1.

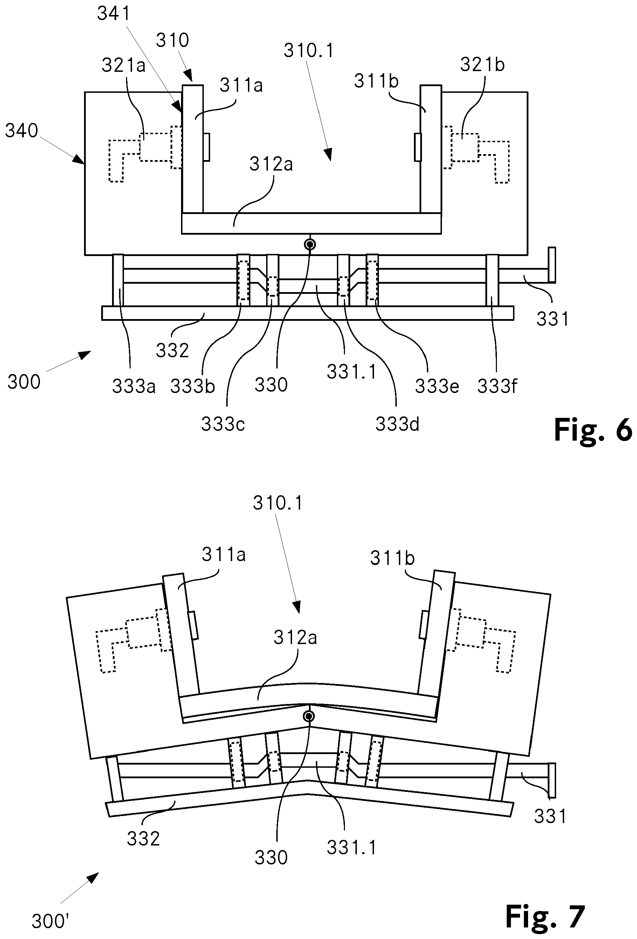

Fig. 6 shows another measurement cell 300 comprising a support structure 340 carrying a removable insert 310 defining a cuboid channel-shaped receiving area 310.1 in the measurement position. The structural elements of the support structure 340 are mainly made of metal. The support structure 340 has an insert mounting area 341 that surrounds and supports the insert 310 at the outside. The insert 310 is similar in design to mold 110 shown in Fig. 1 and consists for example of a flexible silicone material. The channel-shaped receiving area 310.1 is limited at the left side by a first rectangular side wall 311a and a the right side by a second rectangular side wall 311b, whereby the side walls 311a and 311b are arranged plane parallel with respect to each other. At the bottom, the channel-shaped receiving area 310.1 is limited by a rectangular bottom wall 312a, whereby the bottom wall 312a is oriented perpendicular to both of the side walls 311a, 311b.

The left side and the right side of the support structure 340 are connected to each other via a mechanical hinge 330. Additionally, a locking mechanism is arranged below at the bottom of the support structure 340. The locking mechanism comprises a rotatable axis 331 with eccentric sections 331.1, whereby the rotatable axis 331 is mounted in several bearings 333a - f, which interconnect the bottom part of the support structure 340 below the insert 310 and a flexible base plate 332. Bearings 333a and 333f comprise essentially cylindrical holes with a diameter slightly larger than the diameter of the axis 331. Bearings 333b, 333e comprise oblong through holes in vertical direction, whereas bearings 333c, 333d comprise oblong through holes in horizontal direction. Thus, by rotating the eccentric sections 331.1, the two parts of the support structure 340 are tilted around the hinge 330 whereby a change in shape of the channel-shaped receiving area 310.1 as shown in Fig. 7 is obtained.

In the demolding position of shown in Fig. 7, the side walls 311a, 311b of the measurement cell stand at an angle against each other and the bottom wall 312a is in a bent configuration. This allows for removing hardened mineral binder compositions from the receiving area 310.1 as explained with Fig. 4 and 5.

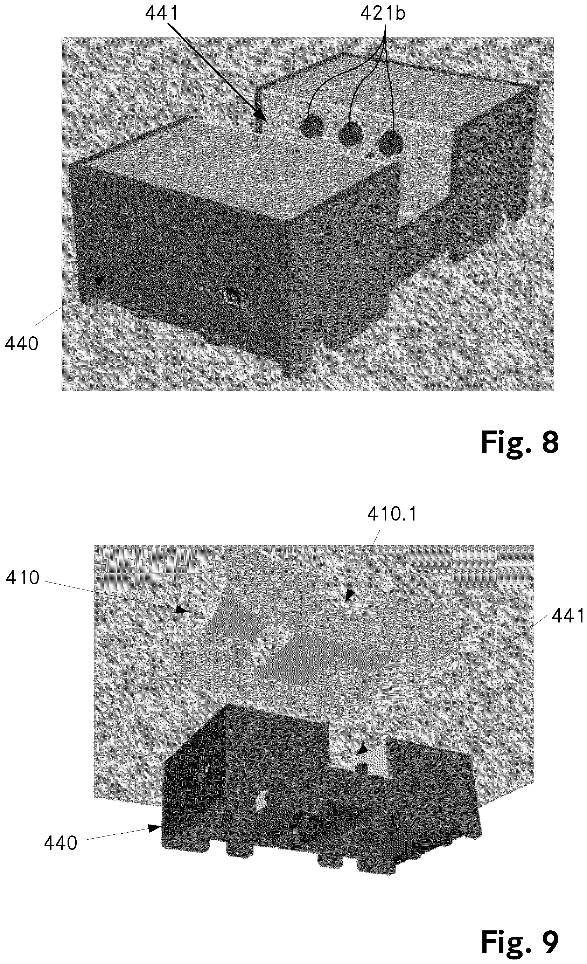

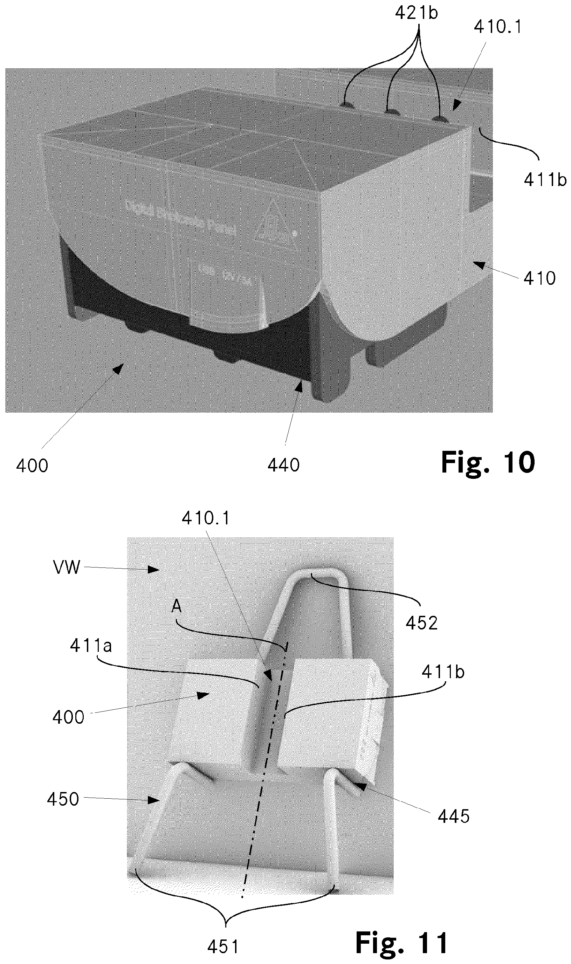

Fig. 8 shows a perspective view of a rendering of further support structure 440 which is part of a further measurement cell 400 according to the invention shown in Fig. 10. The support structure 440 is similar in design as support structure 340 shown in Fig. 6 and 7 and has a central insert mounting area 441 between the ultrasound receivers 421b and the opposing ultrasound transmitters (not visible in the perspective view of Fig. 8). The structural elements of the support structure are mainly made of metal.

In addition to the ultrasound receivers 421b, the ultrasound transmitters and the hinge as well as the locking mechanism, the support structure 440, at the inside, comprises a control unit with a microprocessor, a memory device for storing measurement programs and data, a wired as well as a wireless communication interface for receiving and/or sending control data and/or measurement data, a power connector and operating elements in the form of buttons.

Fig. 9 shows a perspective view of a rendering of further insert 410 made of silicone that is configured to be mounted on the support structure 440. The insert comprises a cuboid channel-shaped receiving area 410.1 that is configured to be received in the insert mounting area 441 of the support structure 440. The overall shape of the insert 410 is such that the top side and all of the side areas of the support structure 440 is covered by the insert 410 for protecting the support structure 440 from being contaminated with mineral binder composition when filling the channel-shaped receiving area 410.1.

Fig. 10 shows a perspective view of a rendering of a further measurement cell 400 comprising the support structure 440 with the insert 410 mounted.

Fig. 11 shows an arrangement whereby the measurement cell 400 is placed on a stand 450. The stand 450 is configured as a leaning shelf with two legs 451 placed on a horizontal plane, e.g. a floor area in a tunnel, an upper end 452 leaning against a vertical wall VW, e.g. a tunnel wall to be coated with shotcrete, and a support area 445 being formed by a bent section of the legs 451.

The stand 450 is configured for keeping the measurement cell in such a position that the longitudinal axis A stands at an angle to the horizontal, e.g. 60°. Thereby, the measurement cell 400 is kept in such a position that the side walls 411a, 411b of the channel-shaped receiving 410.1 area are arranged in plane parallel vertical planes and/or, with respect to the direction of the gravitational force, the first face end of the channel-shaped receiving area is at a lower position that the second face end of the channel-shaped receiving area.

Also, the stand 450 can be used as a stretcher to carry the the measurement cell, e.g. by two persons. Thereby, for example, a first person can keep the stand 450 at the legs 451 whereas a second person can keep the stand 450 at the upper end 452. This allows for moving the measurement cell without touching it and/or chaning its configuration.

It will be appreciated by those skilled in the art that the present invention can be implemented in other specific forms without departing from the spirit or essential characteristics thereof. The presently disclosed implementations and embodiments are therefore considered in all respects to be illustrative and not restricted.

## Claims

1. Measuring cell (100, 200, 300, 400) for measuring material properties of a mineral binder composition, especially the strength of the mineral binder composition, during the hardening process of the mineral binder composition, especially for measuring a strength development of a shotcrete composition (SC), whereby the measurement cell comprises:
- a mold (110) with a channel-shaped receiving area (110.1) having a longitudinal axis (A) for receiving the mineral binder composition, whereby the channel-shaped receiving area (110.1) is limited laterally by a first side wall (111a) and an opposing second side wall (111b), and at the bottom by a bottom wall (112a);
- whereby the channel-shaped receiving area (110.1) at an upper area (112b) opposite the bottom is open for introduction of the mineral binder composition from an area outside the mold (110); and the channel-shaped receiving area (110.1) at a first face end (113a. 1) and/or at a second face end (113b. 1) is open, such that the channel-shaped receiving area (110.1) opens to the area outside the mold (110) at the first and/or the second face end; and
- at least one ultrasound transmitter (121a) is arranged in the first side wall (111a), such that in operation, ultrasound signals can be introduced into the channel-shaped receiving area (110.1); and
- at least one ultrasound receiver (121b) is arranged in the second side wall (111b), such that in operation, ultrasound signals introduced into the channel-shaped receiving area (110.1) by at least one ultrasound transmitter (121a) can be detected by the at least one ultrasound receiver (121b).

2. Measuring cell according to claim 1, whereby the channel-shaped receiving area (110.1), in a direction perpendicular to the longitudinal axis, has an essentially constant cross-section, especially a rectangular shape, from the first face end (113a. 1) to the second face end (113b. 1).

3. Measuring cell according to any of preceding claims, whereby a first opening area (113a) at the first face end (113a. 1) and/or a second opening area (113b) at the second face end (113b. 1) is essentially identical in size and shape with a cross-section of the channel-shaped receiving area (110.1) in the area of the first face end (113a) and/or a cross-section of the channel-shaped receiving area (110.1) in the area of the second face end (113b).

4. Measuring cell according to any of preceding claims, whereby the channel-shaped receiving area (110.1) has a cuboid shape, whereby the first side wall (111a), the second side wall (111b) and/or the bottom wall (112a) have a rectangular shape.

5. Measuring cell according to any of preceding claims, whereby two, three, four or more ultrasound transmitters (121a) are arranged in the first side wall (111a) and two, three or more ultrasound receivers (121b) are arranged in the second side wall (111b), whereby, preferably, one ultrasound transmitter and one ultrasound receiver are assigned to each other, such that in operation, ultrasound signals introduced into the channel-shaped receiving area (110.1) by the one ultrasound transmitter can be detected by the assigned one ultrasound receiver, in particular independently from the other transmitter(s) and receiver(s).

6. Measuring cell according to any of preceding claims, whereby the at least one ultrasound transmitter (121a) and/or the at least one ultrasound receiver (121b) with its/their end(s) are flush-mounted in the first side wall (111a) and/or in the second side wall (111b), especially such that the at least one ultrasound transmitter and/or the at least one ultrasound receiver does/do not protrude into the channel-shaped receiving area.

7. Measuring cell (200, 300, 400) according to any of preceding claims, whereby the mold (210) is configured such, that as shape of the channel-shaped receiving area (210.1) can be changed between a measurement position and a demolding position.

8. Measuring cell according to any of preceding claims, whereby the mold (210) comprises a hinge mechanism that allows the first side wall (211a) and/or the second side wall (211b) to be tilted away from each other around a tilt axis (230) running essentially in parallel to the longitudinal axis (A), especially the tilt axis (230) is located in the area of the bottom wall (212a); and, preferably, the hinge mechanism comprises a locking mechanism (231, 212a.1) that allows to lock the channel-shaped receiving area (210.1) in the measurement position and to change the channel-shaped receiving (210.1) area to the demolding position.

9. Measuring cell (300, 400) according to any of preceding claims, whereby the mold comprises a support structure (340) and an insert (310), especially a removable insert, whereby the insert defines the channel-shaped receiving area (310.1).

10. Measuring cell according to any of preceding claims, whereby the insert (310), the first side wall (311a), the second side wall (311b), and/or the bottom wall (312a) of the mold are made from synthetic material, especially from silicone.

11. Arrangement comprising a measurement cell (100, 200, 300, 400) according to any of preceding claims and a stand (450) that is configured for keeping the measurement cell and/or for carrying the measurement cell.

12. Method for measuring material properties of a mineral binder composition, especially the strength of the mineral binder composition, during the hardening process of the mineral binder composition, with a measuring cell according to any of claims 1 - 10 or an arrangement according to claim 11, comprising the steps of:
- Filling, especially by spraying, a workable mineral binder composition into the channel-shaped receiving area (110.1), especially from an area outside through the open upper area (112b) opposite the bottom of the channel-shaped receiving area (110.1), such that the at least one ultrasound transmitter (121a) and the at least one ultrasound receiver (121b) are in contact with the workable mineral binder composition, in particular the whole channel-shaped receiving area (110.1) is filled with the mineral binder composition,
- Transmitting an ultrasound signal through the hardening mineral binder composition with the at least one ultrasound transmitter (121a),
- With the at least one ultrasound receiver (121b), recording a temporal evolution of the ultrasound signal, especially the temporal evolution of the ultrasound velocity and/or intensity of the transmitted ultrasound signal, in particular at a predefined sampling rate, e.g. 0.1 Hz - 50 MHz.

13. Method according to claim 12, whereby the mineral binder composition is a shotcrete composition and/or the channel-shaped receiving area (110.1) is filled by a shotcrete application technique.

14. Method according to any of claims 12 - 13, whereby the channel-shaped receiving area (110.1) is filled with a shotcrete composition during the process of application of the same shotcrete composition on a substrate at a construction site, whereby the shotcrete composition is sprayed into the channel-shaped receiving area (110.1) at the same place and with the same application technique, especially under identical application conditions, as the shotcrete composition is applied on the substrate.

15. Method according to claim any of claims 12 - 14, whereby during the filling of the channel-shaped receiving area (110.1), the measurement cell is arranged such that the longitudinal axis (A) of the measurement cell stands at an angle to the horizontal, especially an angle of 5 - 80°, in particular 10 - 60°, preferably 15-30°.

16. Use of a measurement cell according to any of claims 1 - 10 or of an arrangement according claim 11, for measuring material properties of a mineral binder composition, especially the strength of the mineral binder composition, in particular the temporal strength evolution of a mineral binder composition, during the hardening process of the mineral binder composition, in particular within or over a period of at least 12 hours, especially within or over a period of at least 24 hours after applying the mineral binder composition in the measurement cell.
